# EUROPEAN PATENT APPLICATION

(11) **EP 4 575 556 A1**
(43) Date of publication of application: **25.06.2025**
(21) Application number: 24215567.9
(22) Date of filing: 26.11.2024
(51) Int. Cl.: G01S 7/40, G01S 13/95

(54) **DETECTING HARDWARE FAILURE IN A RADAR SYSTEM BASED ON COMPARING ACTUAL AND EXPECTED RADAR DATA**

(30) Priority: 21.12.2023 US 202318392120
(71) Applicant: Honeywell International Inc., Charlotte, NC 28202 (US)
(72) Inventor: WINSTEAD, Benjamin J., Charlotte, 28202 (US); BUNCH, Brian P., Charlotte, 28202 (US); GLAZE, Patrick K, Charlotte, 28202 (US); GOLESTANI, Yahya, Charlotte, 28202 (US)
(74) Representative: Haseltine Lake Kempner LLP

(57) **Abstract**

A system includes a radar system comprising transmission circuitry configured to output a set of transmitted radar signals, receiving circuitry configured to detect a set of reflected radar signals corresponding to the set of transmitted radar signals, and first processing circuitry configured to determine a set of radar data. The system also includes a sensor health monitoring system comprising second processing circuitry configured to receive object data indicative of one or more characteristics of an object, and determine, based on the one or more characteristics of the object, one or more expected parameters. Additionally, the second processing circuitry is configured to compare one or more actual parameter values of the radar data with the one or more expected parameter values of the radar data and determine, based on comparing the one or more actual parameter values with the one or more expected parameter values, a reliability of the radar system.

## Description

### TECHNICAL FIELD

This disclosure relates to radar systems.

### BACKGROUND

An aircraft may use an onboard radar system to detect weather and terrain, and display information associated with weather and terrain to a flight crew. The onboard radar system may be mounted on the aircraft and may use radar scans to detect reflected radar signals from weather formations such as convective weather cells associated with turbulence, rain, lightning, and hail. Additionally, or alternatively, the onboard weather system may detect radar signals from ground terrain. The onboard radar system may control radar scanning and may process radar return signals to present a visual radar display. An aircraft in flight may also receive weather data from other sources such as ground-based radar stations.

### SUMMARY

In general, this disclosure is directed to methods, techniques, devices, and systems for detecting failure or decreased performance in a radar system. Radars may, in some examples, emit one or more radar signals. These radar signals may reflect off one or more objects and return to the radar system. Based on the transmitted radar signals and the reflected radar signals, the radar system may identify inclement weather, terrain, or other objects. The radar system may be configured to determine one or more characteristics of an object based on the transmitted radar signals and the reflected radar signals. For example, a magnitude of reflected radar signals corresponding to an object having a hard surface (e.g., a face of a mountain) may be greater than reflected radar signals corresponding to a partially translucent object (e.g., a cloud).

A magnitude of reflected radar signals may, in some cases, depend on a location of an object relative to a radar system. For example, when an object is located directly in front of a radar system along a sensor axis of the radar system, reflected radar signals corresponding to the object may have a higher magnitude as compared with radar signals corresponding to an identical object that is displaced from a sensor axis of the radar system. The aspect angle (e.g., an orientation relative to the sensor axis) of the object, a size and shape of the object, and one or more surface materials of the object may also affect a magnitude of radar signals corresponding to the object. This means that it may be possible to determine an "expected" magnitude of radar signals corresponding to an object based on any one or combination of a location of the object, the aspect angle of the object relative to the radar system, and one or more other characteristics of the object. When the actual magnitude of radar signals corresponding to an object are different from the expected magnitude of radar signals corresponding to the object, this may indicate a failure condition present at the radar system.

The techniques of this disclosure may provide one or more advantages. For example, a sensor health monitoring system may obtain data, separate from radar data, that indicates a location of one or more objects relative to a radar system. The sensor health monitoring system may evaluate radar data to determine whether the radar data sufficiently indicates the one or more objects identified by the data separate from the radar data. For example, the sensor health monitoring system may determine an expected magnitude of radar data corresponding to each object of the one or more objects based on the location of each object of one or more objects indicated by the data separate from the radar data. The sensor health monitoring system may compare the magnitude of the radar data corresponding to each object of the one or more objects with the actual magnitude of the radar data corresponding to each object of the one or more objects to evaluate a performance of the radar system. Using data separate from radar data to evaluate a performance of a radar system may improve an ability of a system to detect failure in a radar system as compared with systems that do not use data separate from radar data to evaluate a performance of a radar system.

In some examples, a system includes a radar system comprising transmission circuitry configured to output a set of transmitted radar signals, receiving circuitry configured to detect a set of reflected radar signals corresponding to the set of transmitted radar signals, and first processing circuitry configured to determine, based on the set of transmitted signals and the set of reflected radar signals, a set of radar data. The system also includes a sensor health monitoring system comprising second processing circuitry configured to receive object data indicative of one or more characteristics of an object, wherein the object data is separate from the set of radar data and determine, based on the one or more characteristics of the object relative to the radar system, one or more expected parameter values of radar data of the set of radar data corresponding to the object. Additionally, the second processing circuitry is configured to compare one or more actual parameter values of the radar data corresponding to the object with the one or more expected parameter values of the radar data and determine, based on comparing the one or more actual parameter values with the one or more expected parameter values, a reliability of the radar system.

In some examples, a method includes outputting, by transmission circuitry of a radar system, a set of transmitted radar signals, detecting, by receiving circuitry of the radar system, a set of reflected radar signals corresponding to the set of transmitted radar signals, and determining, by first processing circuitry of the radar system, a set of radar data based on the set of transmitted signals and the set of reflected radar signals. The method also includes receiving, by second processing circuitry of a sensor health monitoring system, object data indicative of one or more characteristics of an object, wherein the object data is separate from the set of radar data, determining, by the second processing circuitry based on the one or more characteristics of the object, one or more expected parameter values of radar data of the set of radar data corresponding to the object, comparing, by the second processing circuitry, one or more actual parameter values of the radar data corresponding to the object with the one or more expected parameter values of the radar data, and determining, by the second processing circuitry based on comparing the one or more actual parameter values with the one or more expected parameter values, a reliability of the radar system.

In some examples, a non-transitory computer-readable medium includes instructions for causing one or more processors to control transmission circuitry of a radar system to output a set of transmitted radar signals, control receiving circuitry of the radar system to detect a set of reflected radar signals corresponding to the set of transmitted radar signals, and determine a set of radar data based on the set of transmitted signals and the set of reflected radar signals. Additionally, the instructions may cause the one or more processors to receive object data indicative of one or more characteristics of an object, wherein the object data is separate from the set of radar data, determine, based on the one or more characteristics of the object, one or more expected parameter values of radar data of the set of radar data corresponding to the object, compare one or more actual parameter values of the radar data corresponding to the object with the one or more expected parameter values of the radar data, and determine, based on comparing the one or more actual parameter values with the one or more expected parameter values, a reliability of the radar system.

The summary is intended to provide an overview of the subject matter described in this disclosure. It is not intended to provide an exclusive or exhaustive explanation of the systems, device, and methods described in detail within the accompanying drawings and description below. Further details of one or more examples of this disclosure are set forth in the accompanying drawings and in the description below. Other features, objects, and advantages will be apparent from the description and drawings, and from the claims.

### BRIEF DESCRIPTION OF DRAWINGS

FIG. 1 is a conceptual diagram illustrating an example of a vehicle equipped with a radar system and a sensor health monitoring system, in accordance with one or more techniques of this disclosure.
FIG. 2A is a conceptual diagram illustrating a side perspective view of a first aircraft, a second aircraft within a field of view of a radar system of the first aircraft, and a third aircraft within the field of view of the radar system of the first aircraft, in accordance with one or more techniques of this disclosure.
FIG. 2B is a conceptual diagram illustrating a rear perspective view of a first aircraft, a second aircraft within a field of view of a radar system of the first aircraft, and a third aircraft within the field of view of the radar system of the first aircraft, in accordance with one or more techniques of this disclosure.
FIG. 3 is a block diagram illustrating a radar system and a sensor health monitoring system, in accordance with one or more techniques of this disclosure.
FIG. 4 is a flow diagram illustrating an example operation for determining a reliability of a radar system using a sensor health monitoring system, in accordance with one or more techniques of this disclosure.

### DETAILED DESCRIPTION

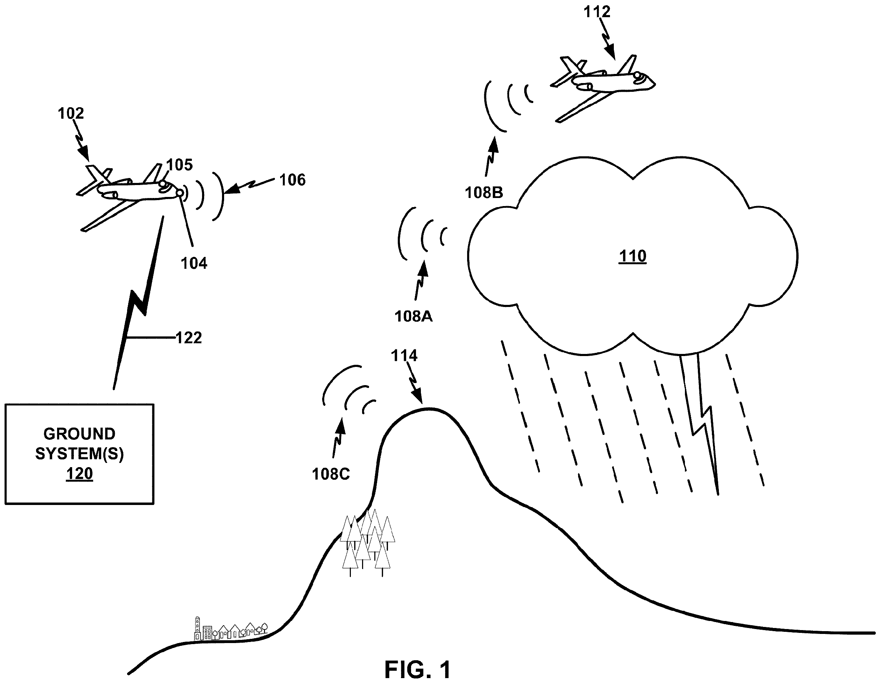

FIG. 1 is a conceptual diagram illustrating an example of a vehicle equipped with a radar system 104 and a sensor health monitoring system 105, in accordance with one or more techniques of this disclosure. The vehicle in FIG. 1 is depicted as aircraft 102; however, the techniques of this disclosure may similarly be applicable to any other air vehicle, such as a helicopter or unmanned aerial vehicle (UAV). In some examples, the techniques of this disclosure may similarly be applicable to a ground vehicle, a seagoing vessel, or an object other than a vehicle.

Aircraft 102 includes a radar system 104 and a sensor health monitoring system 105. Radar system 104 and sensor health monitoring system 105 may be integrated into a single coherent unit, or alternatively, may be two physically distinct units in data communication with one another. In some examples, radar system 104 and sensor health monitoring system 105 are located entirely onboard aircraft 102. In some examples, one or more components of radar system 104 and/or sensor health monitoring system 105 are separated from aircraft 102 (e.g., within one or more ground systems).

Radar system 104 may, in some examples, include transmission circuitry and reception circuitry. Transmission circuitry of radar system 104 may be configured to output transmitted radar signals 106. In some examples, transmitted radar signals 106 may comprise one or more radar signals that propagate at the speed of light. In some examples, transmitted radar signals 106 comprise radio waves having a frequency. Transmitted radar signals 106 may, in some examples, partially reflect off one or more objects. The reception circuitry of radar system 104 may be configured to detect reflected radar signal(s) 108A-108C (collectively, "reflected radar signals 108"). In some examples, reflected radar signals 108 may correspond to transmitted radar signals 106 that reflect off one or more objects. In some examples, components of radar system 104 (e.g., transmission circuitry, reception circuitry, antenna, user interface, antenna) may be placed in different locations of aircraft 102. One or more components of radar system 104 may be separated from one or more other components of radar system 104. On some examples, components of radar system 104 may communicate with each other even when the components are physically separated.

Radar system 104 performs and processes radar scans. Radar system 104 may include processing circuitry configured to identify, based on reflected radar signals 108, one or more obstacles, weather, or other objects surrounding aircraft 102. For example, the processing circuitry of radar system 104 may determine a distance between radar system 104 and an object by measuring a time between transmission of radar signals and reception of radar signals reflected off the object. Processing circuitry of radar system 104 may additionally or alternatively use the Doppler effect to determine the velocity of an object by measuring a difference in frequency between transmitted radar signals and reflected radar signals corresponding to the object. In some examples, radar system 104 may output, to a user interface, information corresponding to one or more identified objects for display to a user, such as a pilot of aircraft 102.

In some examples, radar system 104 may be configured to detect, based on transmitted radar signals 106 and reflected radar signals 108A, an instance of inclement weather (e.g., weather 110). Inclement weather may generally include any hazardous atmospheric disturbance, such as a storm cell, storm clouds, hail, rain, tornadoes, hurricanes, and blizzards. Radar system 104 may identify one or more areas of potential headwinds and/or turbulence based on radar data corresponding to weather 110. Radar system 104 may be configured to determine a distance between aircraft 102 and weather 110, a size of weather 110, and one or more other characteristics of weather 110 by analyzing transmitted radar signals 106 and reflected radar signals 108A. In some examples, radar system 104 may be configured detect an identity of weather 110 based on transmitted radar signals 106 and reflected radar signals 108A. That is, radar system 104 may be configured to determine that weather 110 is weather as opposed to another object such as an aircraft or terrain.

Radar system 104 may be configured to detect, based on transmitted radar signals 106 and reflected radar signals 108B, aircraft 112. In some examples, radar system 104 may be configured to determine a distance between aircraft 102 and aircraft 112, a velocity of aircraft 112, a direction in which aircraft 112 is traveling, and one or more other characteristics of aircraft 112 based on transmitted radar signals 106 and reflected radar signals 108B. In some examples, radar system 104 may be configured detect an identity of aircraft 112 based on transmitted radar signals 106 and reflected radar signals 108B. That is, radar system 104 may be configured to determine that aircraft 112 is an aircraft as opposed to another object such as weather or terrain.

Radar system 104 may be configured to detect, based on transmitted radar signals 106 and reflected radar signals 108C, terrain 114. In some examples, radar system 104 may be configured to determine an absolute distance between aircraft 102 and terrain 114, a difference in altitude between aircraft 102 and a highest altitude of terrain 114, and one or more other characteristics of terrain 114 based on transmitted radar signals 106 and reflected radar signals 108C. In some examples, radar system 104 may be configured to detect an identity of terrain 114 based on transmitted radar signals 106 and reflected radar signals 108C. That is, radar system 104 may be configured to determine that terrain 114 is terrain as opposed to another object such as weather or an aircraft.

In some examples, radar system 104 may be configured to store three-dimensional (3D) radar data in a memory. In some examples, the 3D radar data may include radar data corresponding to weather 110, aircraft 112, terrain 114, and one or more other objects. 3D weather data may include data for one or more points within a 3D Cartesian space. Radar system 104 may update the 3D radar data stored in the memory based on the most recent data arriving at aircraft 102, so that the 3D radar data reflects the current state of a 3D environment surrounding aircraft 102. Radar system 104 may, in some examples, output at least some of the 3D radar data for display on a user interface (e.g., a touchscreen) so that users can view the data. Radar system 104 may, in some cases, include a control panel separate from a screen and the radar system 104 may display information on the screen and receive user inputs via the control panel. In these examples, the screen and the control panel may be collectively be referred to as a "user interface." In some examples, the user interface may receive one or more user inputs. These user inputs may include requests to display data, requests to "zoom in" or "zoom out," requests to obtain data, information concerning a flight plan, or any combination thereof.

In some examples, a user interface (e.g., a touchscreen) of radar system 104 is configured to display a two-dimensional (2D) overhead profile of the 3D environment surrounding aircraft 102. The radar system 104 may display the 2D overhead profile based on the 3D radar data stored in the memory. In some examples, the 2D overhead profile of the 3D environment may indicate information corresponding to weather 110, aircraft 112, terrain 114, or any combination thereof. For example, the 2D overhead profile may indicate a position of the aircraft, a position of the weather 110, a position of aircraft 112, and a position of terrain 114 from a perspective above aircraft 102 looking at the ground.

The user interface of radar system 104 may also be configured to display a cross-section of the 3D radar data at a certain altitude requested by the user. For example, weather 110 and terrain 114 may differ based on the altitude, and the user may want to view weather 110 and/or terrain 114 at a certain altitude. Since the radar data stored in the memory is three-dimensional, the radar system 104 may display a "slice" of the 3D radar data corresponding to an altitude. The user interface of radar system 104 may display information corresponding to weather 110, aircraft 112, and/or terrain 114 at an altitude requested by the user and/or display a top-down view of the 3D environment surrounding aircraft 102 from a perspective above aircraft 102. In some examples, radar system 104 may receive, via the touchscreen, a user selection of a region of the 3D environment near the aircraft. Radar system 104 may determine, based on 3D radar data, additional information corresponding to the selected region of the 3D environment. For example, the additional information may include a maximum altitude of terrain 114, a maximum altitude of weather 110, a velocity of aircraft 112, or any combination thereof.

Sensor health monitoring system 105 may, in some examples, be configured to evaluate a performance of radar system 104. For example, sensor health monitoring system 105 may be configured to evaluate an extent to which radar system 104 is configured to identify objects accurately and reliably such as weather 110, aircraft 112, and terrain 114 and an extent to which radar system 104 is configured to identify accurately and reliably characteristics of these objects. In some examples, failure conditions present in hardware of radar system 104 may affect an extent to which radar system 104 is configured to identify characteristics of the 3D environment surrounding aircraft 102 accurately and reliably. It may be beneficial for sensor health monitoring system 105 to monitor a radar system 104 to determine whether radar system 104 is configured to reliably collect and analyze data.

Radar system 104 may, in some examples, use built-in test functions to detect hardware failures. For example, a hardware failure may result in a loss in gain and/or sensitivity (e.g., a loss of 20 or more decibels (dB)). Loss may be caused by a failure in cabling between radar radio frequency (RF) circuitry and a radar antenna. These failures in cabling may, in some examples, be difficult to detect because one or more components associated with the failures might not be located within a self-test path of radar system 104. Radar system 104 may, in some examples, detect failures by confirming that radar system 104 receives reflected radar signals 108 that exceed a threshold sensitivity. But when aircraft 102 flies over a body of water (e.g., an ocean or a very large lake) for a long period of time in clear weather, signals received by radar system 104 might not exceed the sensitivity threshold of radar system 104 because there might not be objects in the 3D environment surrounding aircraft 102 configured to reflect radar signals that radar system 104 can sense exceeding the sensitivity threshold. In this example, built-in test functions of radar system 104 might not detect hardware failures in radar system 104.

Sensor health monitoring system 105 may, in some examples, be configured to detect hardware failures in radar system 104 when one or more reflected radar signals do not exceed sensitivity threshold because aircraft 102 is over water in clear weather. For example, sensor health monitoring system 105 may receive radar data corresponding to radar system 104. Sensor health monitoring system 105 may receive object data separate from radar data that indicates one or more characteristics of an object. For example, object data may indicate a location of an object relative to radar system 104, an aspect angle of the object relative to radar system 104, a size of the object, a shape of the object, one or more surface materials of the object, or any combination thereof. For example, sensor health monitoring system 105 may receive Automatic Dependent Surveillance-Broadcast (ADS-B) data and/or traffic collision avoidance system (TCAS) data that indicates characteristics of an aircraft other than aircraft 102. Sensor health monitoring system 105 may evaluate radar data corresponding to the other aircraft and the object data separate from the radar data to determine whether one or more error conditions are present in radar system 104.

ADS-B data is used in aviation to track aircraft as they travel through airspace. ADS-B is an important tool for managing air traffic to facilitate air travel and maintaining aviation safety. ADS-B data corresponding to an aircraft may include any one or combination of identity data indicating a unique identifier for the aircraft, position data indicating a precise location of the aircraft, velocity data indicating a speed and a direction of the aircraft, altitude data indicating a current altitude of the aircraft above sea level, and flight information indicating details corresponding to a flight associated with the aircraft. This means that ADS-B data may include information that overlaps with information indicated by radar data. For example, radar data collected by radar system 104 may indicate any one or combination of a location, velocity, and altitude of another aircraft near aircraft 102. This information may be compared with ADS-B data to evaluate whether one or more error conditions are present in radar system 104.

Aircraft may additionally or alternatively use TCAS data to reduce risk of mid-air collisions between aircraft. TCAS data may include information from transponder signals. For example, TCAS data may include proximity information that indicate an altitude, position, and velocity of one or more aircraft proximate to an aircraft. This means that TCAS data may include information that overlaps with information indicated by radar data. For example, radar data collected by radar system 104 may indicate any one or combination of a location, velocity, and altitude of another aircraft near aircraft 102. This information may be compared with TCAS data to evaluate whether one or more error conditions are present in radar system 104.

In some examples, sensor health monitoring system 105 may receive object data indicative of one or more characteristics of an object. In some examples, the object data may indicate a location of the object relative to radar system 104. The object data indicating the location of the object may, in some examples, be separate from radar data corresponding to the object collected by radar system 104. In some examples, radar data collected by radar system 104 may indicate one or more characteristics of the object that are also indicated by the data separate from the radar data. This means that it may be possible to analyze the radar data to determine if one or more characteristics of the object indicated by the data separate from the radar data are sufficiently indicated by the radar data. In some examples, the data separate from radar data may include ADS-B data and/or TCAS data.

Sensor health monitoring system 105 may, in some examples, process the object data separate from the radar data to determine, based on the location of an object relative to the radar system 104 and/or one or more other characteristics of the object, an expected magnitude of reflected radar signals 108 corresponding to the object. For example, when the object is aircraft 112 and the object data comprises ADS-B data and/or TCAS data that indicates the location of aircraft 112 relative to the location of aircraft 102 and/or one or more other characteristics of aircraft 112, sensor health monitoring system 105 may determine an expected magnitude of reflected radar signals 108B corresponding to aircraft 112 based on the location of aircraft 112 indicated by the object data and/or one or more other characteristics of the aircraft 112. For example, an expected magnitude of reflected radar signals corresponding to an object in a center of a field of view of radar system 104 may be greater than an expected magnitude of reflected radar signals corresponding to an identical object at an edge of a field of view of radar system 104 or to an identical object at a longer range. This means that sensor health monitoring system 105 may use the object data to determine a location of an object within a field of view of the radar system 104, and determine whether one or more error conditions are present in the radar system 104 based on whether the actual magnitude of the reflected radar signals corresponding to the object matches an expected magnitude of the reflected radar signals corresponding to the object.

In some examples, ADS-B data may indicate a presence of an aircraft (e.g., aircraft 112) within range of radar system 104 of aircraft 102. When ADS-B data indicates a presence of aircraft 112, this may indicate that radar system 104 should detect aircraft 112 when radar system 104 is healthy and reliable. If radar system 104 does not detect aircraft 112, but ADS-B data indicates that radar system 104 should detect aircraft 112, this may indicate that radar system 104 has failed. For example, when the actual parameter values of radar data collected by radar system 104 do not indicate aircraft 112, but ADS-B data indicates that aircraft 112 is present, this may indicate that radar system 104 has failed and is missing aircraft 112 due to this failure. Sensor health monitoring system 105 may perform one or more measurements to determine a reliability of radar system 104. In some examples, sensor health monitoring system 105 may perform more than one measurement corresponding to aircraft 112 to assess a reliability of radar system 104. Performing more than one measurement may improve an accuracy of failure detection as compared with performing only one measurement.

Sensor health monitoring system 105 may determine the expected magnitude of reflected radar signals 108 corresponding to the object based on one or more factors in addition to or instead of the location of the object relative to radar system 104. An aspect angle of the object relative to a sensor axis of radar system 104, a size and shape of the object, and one or more surface materials of the object may affect an expected magnitude of radar signals. For example, an object having a metal surface (e.g., an aircraft) may reflect radar signals more effectively than an object made of soil (e.g., terrain). Some information other than the location of an object may be indicated by ADS-B data and/or TCAS data. Sensor health monitoring system 105 may identify information corresponding to an object based on ADS-B data, TCAS data, other data sources, or any combination thereof.

Sensor health monitoring system 105 may compare, for the object indicated by object data, an actual magnitude of the reflected radar signals corresponding to the object with the expected magnitude of the set of reflected radar signals. For example, when the object is aircraft 112, sensor health monitoring system 105 may compare the actual magnitude of reflected radar signals 108B with an expected magnitude of reflected radar signals 108B determined based on the location of aircraft 112 as indicated by the object data. The object data may include ADS-B data and/or TCAS data indicating a location, altitude, and/or position of aircraft 112. Additionally, or alternatively, the object data may indicate one or more other characteristics of aircraft 112 such as an aspect angle of aircraft 112 relative to radar system 104, a size of aircraft 112, a shape of aircraft 112, one or more surface materials of aircraft 112, or any combination thereof.

In some examples, to compare the actual magnitude of reflected radar signals 108B with an expected magnitude of reflected radar signals 108B determined based on the location of aircraft 112 as indicated by the object data, sensor health monitoring system 105 may calculate a difference between the actual magnitude of reflected radar signals 108B with an expected magnitude of reflected radar signals 108B. In some examples, to compare the actual magnitude of reflected radar signals 108B with an expected magnitude of reflected radar signals 108B, sensor health monitoring system 105 may calculate a ratio of the actual magnitude of reflected radar signals 108B to the expected magnitude of reflected radar signals 108B. Sensor health monitoring system 105 may use any computation or equation to compare the actual magnitude of reflected radar signals 108B with the expected magnitude of reflected radar signals 108B.

Sensor health monitoring system 105 may determine, based on comparing the actual magnitude of reflected radar signals 108B to the expected magnitude of reflected radar signals 108B, a reliability of radar system 104. In some cases, to determine the reliability of radar system 104, sensor health monitoring system 105 may determine whether a difference between the actual magnitude of reflected radar signals 108B and the expected magnitude of reflected radar signals 108B is greater than a threshold difference value. In this case, sensor health monitoring system 105 may determine that one or more error conditions are present in the radar system 104 when the difference between the actual magnitude of reflected radar signals 108B and the expected magnitude of reflected radar signals 108B is greater than the threshold difference value. Sensor health monitoring system 105 may determine that one or more error conditions are not present in the radar system 104 when the difference between the actual magnitude of reflected radar signals 108B and the expected magnitude of reflected radar signals 108B is not greater than the threshold difference value.

In some examples, to determine the reliability of radar system 104, sensor health monitoring system 105 may determine whether a ratio of the actual magnitude of reflected radar signals 108B to the expected magnitude of reflected radar signals 108B is within a range of target ratios. When the ratio of the actual magnitude of reflected radar signals 108B to the expected magnitude of reflected radar signals 108B is not within the range of target ratios, sensor health monitoring system 105 may determine that one or more error conditions are present in the radar system 104. When the ratio of the actual magnitude of reflected radar signals 108B to the expected magnitude of reflected radar signals 108B is within the range of target ratios, sensor health monitoring system 105 may determine that one or more error conditions are not present in the radar system 104.

Sensor health monitoring system 105 is not limited to determining the reliability of radar system 104 based on reflected radar signals and object data corresponding to one object. In some examples, sensor health monitoring system 105 may receive object data corresponding to each object of a set of objects within a field of view of radar system 104 during any one or more windows of time. For example, the set of objects may include one or more objects that are within a field of view of radar system 104 during a window of time that is not exactly the same as a window of time that one or more other objects of the set of objects are within the field of view of radar system 104. Radar system 104 may output transmitted radar signals and receive reflected radar signals corresponding to each object of the set of objects. Sensor health monitoring system 105 may compare, for each object of the set of objects, an actual magnitude of the reflected radar signals corresponding to the object with an expected magnitude of the set of reflected radar signals calculated based on the location of the object and/or one or more other characteristics of the object as indicated by the object data for the object. Sensor health monitoring system 105 may determine, based on the comparison corresponding to each object of the set of objects, the reliability of radar system 104.

Sensor health monitoring system 105 is not limited to determining the reliability of radar system 104 by determining expected magnitudes of reflected radar data based on location data corresponding to aircraft. Sensor health monitoring system 105 may determine the reliability of radar system 104 by comparing the actual magnitude of reflected radar signals corresponding to any object with the expected magnitude of reflected radar signals determined based on a known location of the object. The object can be any object configured to reflect radar signals and having a known location relative to radar system 104.

Sensor health monitoring system 105 may, in some examples, be configured to determine the reliability of radar system 104 while aircraft 102 is in flight. It may be beneficial for sensor health monitoring system 105 to monitor the reliability of radar system 104 while aircraft 102 is in flight so that sensor health monitoring system 105 may alert one or more users (e.g., pilots, flight crew) that radar system 104 is compromised if a failure occurs during flight or is first detected mid-flight. For example, while aircraft 102 is in flight for an extended period of time, sensor health monitoring system 105 may monitor the reliability of radar system 104.

Aircraft 102 may be configured to communicate with ground system(s) 120 via communication link 122. In some examples, ground system(s) 120 may be configured to transmit object data to aircraft 102. The object data may indicate a location of one or more objects within a field of view of radar system 104. Additionally, or alternatively, the object data may indicate one or more characteristics of the one or more objects other than location. For example, the object data may include ADS-B data and/or TCAS data indicating a location, altitude, velocity, and/or direction of aircraft 112. In some examples, the object data may indicate a size of aircraft 112, a shape of aircraft 112, an aspect angle of aircraft 112 relative to radar system 104, a surface material of aircraft 112, or any combination thereof. Aircraft 102 may be configured to transmit information to ground system(s) 120. Information may include radar data, ADS-B data, TCAS data, other kinds of data, or any combination thereof. Aircraft 102 is not limited to communicating with ground system(s) 120. In some examples, aircraft 102 may communicate with one or more other kinds of systems or objects such as satellite systems, sea-based systems, other aircraft (e.g., aircraft 112), or any combination thereof.

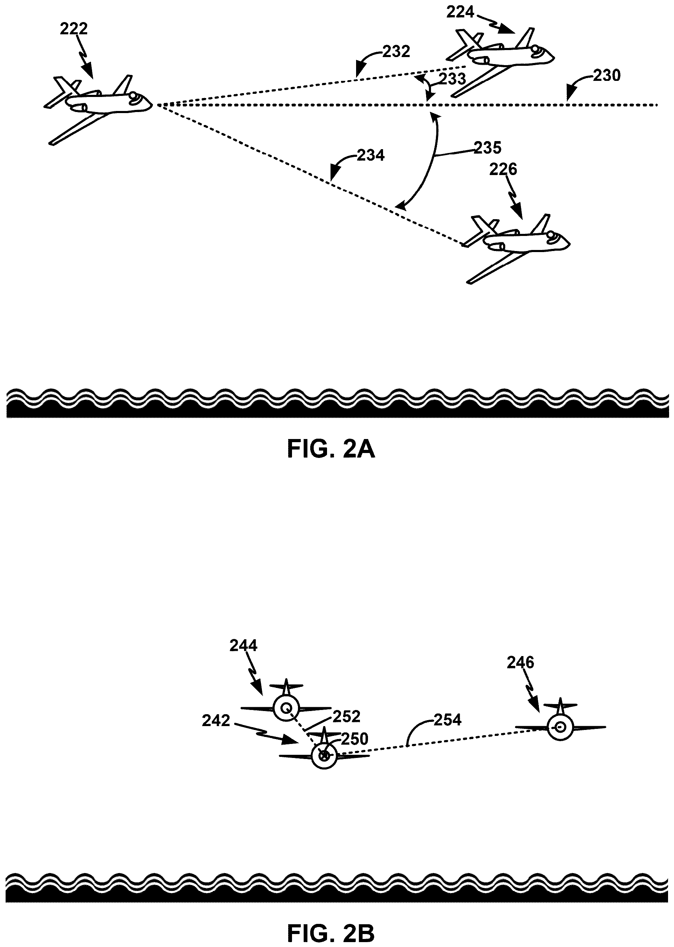

FIG. 2A is a conceptual diagram illustrating a side perspective view of a first aircraft 222, a second aircraft 224 within a field of view of a radar system of first aircraft 222, and a third aircraft 226 within the field of view of the radar system of first aircraft 222, in accordance with one or more techniques of this disclosure. First aircraft 222 may include a radar system that is aligned along sensor axis 230. Sensor axis 230 may, in some examples, be along a boresight of an antenna of the radar system of first aircraft 222. The boresight of the antenna of the radar system may represent a direction of maximum gain of the antenna. In some examples, the antenna may move, and the boresight may move with the antenna. This means that if the antenna of the radar system of first aircraft 222 moves, sensor axis 230 may move with the antenna. As seen in FIG. 2A, second aircraft 224 may be displaced from sensor axis 230 along line 232. Line 232 forms angle 233 with sensor axis 230. Third aircraft 226 may be displaced from sensor axis 230 along line 234. Line 234 forms angle 235 with sensor axis 230.

In some examples, angle 235 is greater than angle 233. This means that an expected magnitude of reflected radar signals received by the radar system of first aircraft 222 corresponding to third aircraft 226 may be lower than an expected magnitude of reflected radar signals received by the radar system of first aircraft 222 corresponding to second aircraft 224. Since second aircraft 224 is not as displaced from sensor axis 230 as compared with third aircraft 226, radar signals reflected off second aircraft 224 may be stronger than radar signals reflected off third aircraft 226.

FIG. 2B is a conceptual diagram illustrating a rear perspective view of a first aircraft 242, a second aircraft 244 within a field of view of a radar system of first aircraft 242, and a third aircraft 246 within the field of view of the radar system of first aircraft 242, in accordance with one or more techniques of this disclosure. First aircraft 242 may include a radar system that is aligned along sensor axis 250. As seen in FIG. 2B, second aircraft 244 may be displaced from sensor axis 250 along line 252. Third aircraft 246 may be displaced from sensor axis 250 along line 254.

In some examples, third aircraft 246 may be more displaced from sensor axis 250 as compared with second aircraft 244. This means that an expected magnitude of reflected radar signals received by the radar system of first aircraft 242 corresponding to third aircraft 246 may be lower than an expected magnitude of reflected radar signals received by the radar system of first aircraft 242 corresponding to second aircraft 244. Since second aircraft 244 is not as displaced from sensor axis 250 as compared with third aircraft 246, radar signals reflected off second aircraft 244 may be stronger than radar signals reflected off third aircraft 246.

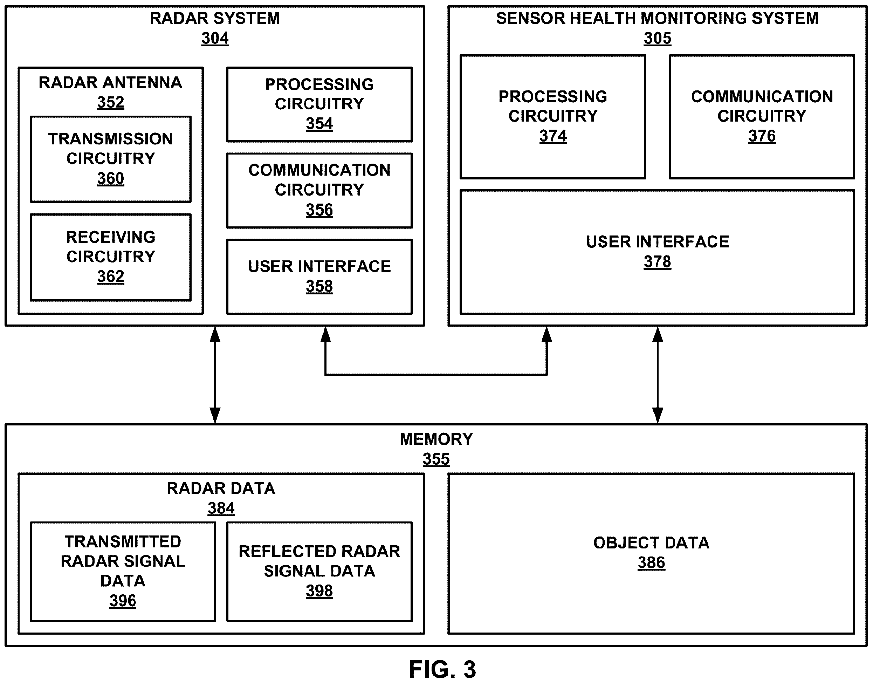

FIG. 3 is a block diagram illustrating a radar system 304 and a sensor health monitoring system 305, in accordance with one or more techniques of this disclosure. Radar system 304 includes radar antenna 352, processing circuitry 354, and user interface 358. Radar antenna 352 includes transmission circuitry 360 and receiving circuitry 362. Sensor health monitoring system 305 may include processing circuitry 374, communication circuitry 376, and user interface 378. Radar system 304 and sensor health monitoring system 305 may communicate with memory 355. Memory 355 may be configured to store radar data 384 and object data 386. Radar data 384 may include transmitted radar signal data 396 and reflected radar signal data 398. Radar system 304 may be an example of radar system 104 of FIG. 1. Sensor health monitoring system 305 may be an example of sensor health monitoring system 105 of FIG. 1. Transmitted radar signal data 396 may comprise data corresponding to transmitted radar signals 106 of FIG. 1. Reflected radar signal data 398 may comprise data corresponding to reflected radar signals 108 of FIG. 1.

Radar antenna 352 may be installed near the front of a vehicle, such as within the nose of aircraft 102 of FIG. 1, and includes transmission circuitry 360 configured to transmit a transmitted radar signals 106 of FIG. 1. For example, transmission circuitry 360 may pass an electric current through a magnetron or some other device, causing emission of electromagnetic waves of a given wavelength via radar antenna 352. In some examples, radar antenna 352 may include separate antennas for transmission circuitry 360 and receiving circuitry 362. In some examples, radar antenna 352 may include the same antenna for transmission circuitry 360 and receiving circuitry 362.

Radar antenna 352 includes receiving circuitry 362 configured to receive a reflected radar signals 108 of FIG. 1. For example, receiving circuitry 362 may include a substance that, when struck by electromagnetic waves of reflected radar signals 108, generates a characteristic electric current indicative of the reflected radar signals 108, which may then be interpreted as data by processing circuitry 354.

Processing circuitry 354 may include fixed function circuitry and/or programmable processing circuitry. Processing circuitry 354 may include any one or more of a microprocessor, a controller, a digital signal processor (DSP), graphics processing unit (GPU), tensor processing unit (TPU), an application specific integrated circuit (ASIC), a field-programmable gate array (FPGA), or equivalent discrete or analog logic circuitry. In some examples, processing circuitry 354 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations.

Processing circuitry 354 may be capable of processing instructions stored in memory 355. In some examples, memory 355 includes a computer-readable medium that includes instructions that, when executed by processing circuitry 354, cause radar system 304 to perform various functions attributed to them herein. Memory 355 may include any volatile, non-volatile, magnetic, optical, or electrical media, such as a random-access memory (RAM), read-only memory (ROM), non-volatile RAM (NVRAM), electrically erasable programmable ROM (EEPROM), ferroelectric RAM (FRAM), dynamic random-access memory (DRAM), flash memory, or any other digital media.

Processing circuitry 354 may receive a signal (e.g., data) indicative of reflected radar signals 108, and process the signal so as to determine one or more objects (e.g., weather 110, aircraft 112, and terrain 114 of FIG. 1) in the vicinity that would have caused the transmitted radar signals 106 to be reflected. For example, processing circuitry 354 may determine, based on reflected radar signals 108A, the presence of weather 110. Processing circuitry 354 may determine, based on reflected radar signals 108B, a presence of aircraft 112. Processing circuitry 354 may determine, based on reflected radar signals 108C, a presence of terrain 114.

Processing circuitry 354 may, in some examples, be configured to determine a set of radar data based on transmitted radar signals 106 and reflected radar signals 108. In some examples, the set of radar data may include one or more differences between a transmission time of a transmitted radar signal of transmitted radar signals 106 and a reception time of a reflected radar signal of reflected radar signals 108 corresponding to the transmitted radar signal. The radar data may include one or more differences between a magnitude of a transmitted radar signal of transmitted radar signals 106 and a magnitude of a reflected radar signal of reflected radar signals 108 corresponding to the transmitted radar signal. The radar data may include one or more differences between a frequency of a transmitted radar signal of transmitted radar signals 106 corresponding to the object and a frequency of a reflected radar signal of reflected radar signals 108 corresponding to the object. The set of radar data may include standalone frequencies, magnitudes, and other parameters of one or more radar signals of transmitted radar signals 106 and reflected radar signals 108. In some examples, processing circuitry 354 may store the set of radar data in memory 355 as part of radar data 384. In some examples, the set of radar data includes transmitted radar signal data 396, reflected radar signal data 398, other data, or any combination thereof.

In some examples, radar system 304 includes communication circuitry 356 in order to communicate with sensor health monitoring system 305 and/or memory 355. Communication circuitry 356 may include any suitable hardware, firmware, software, or any combination thereof for wirelessly communicating with another device. Communication circuitry 356 may include any suitable hardware, firmware, software, or any combination thereof for communication via wired communication links. Communication circuitry 356 may be configured to transmit and/or receive signals via inductive coupling, electromagnetic coupling, Near Field Communication (NFC), Radio Frequency (RF) communication, Bluetooth^{®}, Wi-Fi, or other proprietary or non-proprietary wireless communication schemes.

User interface 358 includes a display (not shown), such as a liquid crystal display (LCD), a light-emitting diode (LED) display, or another type of screen, with which processing circuitry 354 may present information related to radar system 304 (e.g., information relating to weather 110, aircraft 112, and/or terrain 114). In addition, user interface 358 may include an input mechanism to receive input from the user. The input mechanisms may include, for example, any one or more of buttons, a keypad (e.g., an alphanumeric keypad), a peripheral pointing device, a touch screen, or another input mechanism that allows the user to navigate through user interfaces presented by processing circuitry 354 and provide input. In other examples, user interface 358 also includes audio circuitry for providing audible notifications, instructions, or other sounds to the user, receiving voice commands from the user, or both. Memory 355 may include instructions for operating user interface 358.

User interface 358 may be configured to display a graphical indication of one or more objects in the vicinity of aircraft 102 (e.g., weather 110, aircraft 112, and/or terrain 114). For example, a display screen of user interface 358 may output a graphical indication of one or more of weather 110, aircraft 112, and terrain 114 obstacles detected by radar system 304 based on reflected radar signals 108. In some examples, user interfaces 358, 378 may be the same interface, and in some examples, user interfaces 358, 378 may be different interfaces.

Sensor health monitoring system 305 may be configured to monitor a health of circuitry of radar system 304. In some examples, sensor health monitoring system 305 may be configured to detect one or more error conditions present in radar system 304 based on radar data 384 and object data 386 stored by memory 355. One or more error conditions present in radar system 304 may be located within radar antenna 352 or any other part of radar system 304. Error conditions present in radar system 304 may prevent radar system 304 from sensing one or more objects or decrease a reliability of radar system 304 in sensing one or more objects. This means that it may be beneficial for sensor health monitoring system 305 to detect one or more error conditions present in radar system 304 to avoid relying on data collected by radar system 304 that is unreliable or otherwise compromised.

Sensor health monitoring system 305 may include processing circuitry 374. Processing circuitry 374 may include fixed function circuitry and/or programmable processing circuitry. Processing circuitry 374 may include any one or more of a microprocessor, a controller, a DSP, a GPU, a TPU, an ASIC, an FPGA, or equivalent discrete or analog logic circuitry. In some examples, processing circuitry 374 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations. Processing circuitry 374 may be capable of processing instructions stored in memory 355. In some examples, processing circuitry 354 and processing circuitry 374 may represent the same processing circuitry. In some examples, processing circuitry 354 may be separate from processing circuitry 374.

In some examples, sensor health monitoring system 305 includes communication circuitry 376 in order to communicate with radar system 304 and/or memory 355. Communication circuitry 376 may include any suitable hardware, firmware, software, or any combination thereof for wirelessly communicating with another device. Communication circuitry 376 may include any suitable hardware, firmware, software, or any combination thereof for communication via wired communication links. Communication circuitry 376 may be configured to transmit and/or receive signals via inductive coupling, electromagnetic coupling, NFC, RF communication, Bluetooth^{®}, Wi-Fi, or other proprietary or non-proprietary wired or wireless communication schemes. In some examples, communication circuitry 356 and communication circuitry 376 may represent the same processing circuitry. In some examples, communication circuitry 356 may be separate from communication circuitry 376.

User interface 378 includes a display (not shown), such as an LCD, an LED display, or another type of screen, with which processing circuitry 374 may present information related to sensor health monitoring system 305 (e.g., information related to a health of radar system 304). In addition, user interface 378 may include an input mechanism to receive input from the user. The input mechanisms may include, for example, any one or more of buttons, a keypad (e.g., an alphanumeric keypad), a peripheral pointing device, a touch screen, or another input mechanism that allows the user to navigate through user interfaces presented by processing circuitry 375 and provide input. In other examples, user interface 378 also includes audio circuitry for providing audible notifications, instructions, or other sounds to the user, receiving voice commands from the user, or both. Memory 355 may include instructions for operating user interface 378. In some examples, user interface 358 and user interface 378 may represent the same user interface. In some examples, user interface 358 may be separate from user interface 378.

Radar data 384 stored in memory 355 may include transmitted radar signal data 396 and reflected radar signal data 398. In some examples, transmission circuitry 360 may emit one or more transmitted radar signals and save transmitted radar signal data 396 corresponding to the one or more transmitted radar signals. In some examples, receiving circuitry 362 may receive one or more reflected radar signals and save reflected radar signal data 398 corresponding to the one or more reflected radar signals. In some examples, reflected radar signal data 398 may include reflected radar signal data corresponding to each object of one or more objects within a field of view of radar system 304. That is, the reflected radar signal data corresponding to each object of the one or more objects may correspond to one or more reflected radar signals that reflected off the corresponding object.

Transmitted radar signal data 396 may include one or more parameters of transmitted radar signals output by transmission circuitry 360. In some examples, the one or more parameters of transmitted radar signals included in transmitted radar signal data 396 may include a magnitude of transmitted radar signals as a function of time, a frequency of transmitted radar signals as a function of time, a direction of transmitted radar signals as a function of time, or any combination thereof. Reflected radar signal data 398 may include one or more parameters of reflected radar signals received by receiving circuitry 362. In some examples, the one or more parameters of reflected radar signals included in reflected radar signal data 398 may include a magnitude of reflected radar signals as a function of time, a frequency of reflected radar signals as a function of time, a direction of reflected radar signals as a function of time, or any combination thereof.

In some examples, processing circuitry 354 of radar system 304 may be configured to determine characteristics of one or more objects based on transmitted radar signal data 396 and reflected radar signal data 398. For example, processing circuitry 354 may be configured to determine one or more characteristics of an object based on a difference between a magnitude of transmitted radar signals corresponding to an object and a magnitude of reflected radar signals corresponding to the object, a difference between a frequency of transmitted radar signals corresponding to an object and a frequency of reflected radar signals corresponding to the object, a difference between a transmission time of transmitted radar signals corresponding to an object and a reception time of reflected radar signals corresponding to the object, or any combination thereof.

Object data 386 may include object data indicating one or more characteristics of each object of a set of obj ects. In some examples, object data 386 may indicate a location of each object of the set of objects. In some examples, object data 386 may include ADS-B data indicating a location, an altitude, a speed, and a direction of each aircraft of a set of aircrafts. Additionally, or alternatively, object data 386 may include TCAS data indicating a location, an altitude, a speed, and a direction of each aircraft of a set of aircrafts. In some examples, memory 355 may receive at least some of the object data 386 from one or more ground systems (e.g., ground system(s) 120 of FIG. 1. Object data 386 may indicate a size of each object of a set of objects, a shape of each object of the set of objects, an aspect angle of each object of the set of objects relative to radar system 304, and one or more surface materials of each object of the set of objects. In some examples, memory 355 may receive at least some of the object data 386 from one or more aircraft corresponding to the object data 386.

In some examples, processing circuitry 374 of sensor health monitoring system 305 is configured to identify, in object data 386, data indicative of a location of an object relative to radar system 304. In some examples, the object includes an aircraft (e.g., aircraft 112 of FIG. 1). The object data of object data 386 corresponding to aircraft 112, for example, may include a location of aircraft 112 corresponding to a ground coordinate, information corresponding to an altitude of aircraft 112, information corresponding to a speed of aircraft 112, information corresponding to a direction of aircraft 112, or any combination thereof.

In some examples, processing circuitry 374 of sensor health monitoring system 305 is configured to identify, in radar data 384, radar data corresponding to an object relative to radar system 304. In some examples, the object includes an aircraft (e.g., aircraft 112 of FIG. 1). The radar data of radar data 384 corresponding to aircraft 112 may include transmitted radar signal data of transmitted radar signal data 396 corresponding to aircraft 112, reflected radar signal data of reflected radar signal data 398 corresponding to aircraft 112, or any combination thereof. For example, reflected radar signal data 398 may include data corresponding to one or more radar signals reflected off aircraft 112 that correspond to one or more transmitted radar signals. Data indicative of the one or more transmitted radar signals may be stored as part of transmitted radar signal data 396.

Processing circuitry 374 of sensor health monitoring system 305 may determine, based on the location of an object relative to the radar system 304 as indicated by object data 386, one or more expected parameter values of radar data 384 corresponding to the object. Sensor health monitoring system 305 is not limited to determining one or more expected parameter values of radar data 384 based on location of the object. Additionally, or alternatively, sensor health monitoring system 305 may determine the one or more expected parameter values based on an aspect angle of the object relative to radar system 304, a size of the object, a shape of the object, one or more surface materials of the object, or any combination thereof.

In some examples, the object is an aircraft (e.g., aircraft 112). For example, processing circuitry 374 may determine an expected magnitude of reflected radar signals 108B corresponding to aircraft 112. Additionally, or alternatively, processing circuitry 374 may determine an expected frequency of reflected radar signals 108B corresponding to aircraft 112. In some examples, processing circuitry 374 may determine an expected magnitude difference between transmitted radar signals and reflected radar signals corresponding to aircraft 112. In some examples, processing circuitry 374 may determine an expected frequency difference between transmitted radar signals and reflected radar signals corresponding to aircraft 112.

Expected parameters of radar data corresponding to aircraft 112 may correspond to a location of aircraft 112 relative to a location of aircraft 102. For example, when radar system 104 outputs transmitted radar signals 106, one or more parameters of reflected radar signals 108B may depend on the location of aircraft 112 relative to the location of aircraft 102. For example, a magnitude and/or frequency of reflected radar signals 108B may depend on the location, altitude, speed, and/or direction of aircraft 112 relative to the location, altitude, speed, and/or direction of aircraft 102. This means that processing circuitry 374 may determine, based on object data of object data 386 corresponding to aircraft 112, one or more expected parameter values of radar data 384 corresponding to aircraft 112. It may be beneficial to determine expected parameter values of radar data 384 based on object data 386 that is separate from radar data 384 so that sensor health monitoring system 305 is able to compare expected parameter values with actual parameter values to monitor a health of radar system 304.

In some examples, processing circuitry 374 of sensor health monitoring system 305 may determine a 3D location of an object based on object data of object data 386 corresponding to the object. For example, when the object is aircraft 112 and the object data includes ADS-B and/or TCAS data corresponding to aircraft 112, processing circuitry 374 may determine a 3D location of aircraft 112 based on position data and altitude data of aircraft 112 indicated by the ADS-B and/or TCAS data corresponding to aircraft 112. For example, based on position data indicating a position of aircraft 112 corresponding to a 2D ground coordinate and based on altitude data indicating an altitude of aircraft 112, processing circuitry 374 may determine a 3D position of aircraft 112.

Processing circuitry 374 may additionally or alternatively determine a 3D position of aircraft 102. Aircraft 102 may include sensors that track a position, altitude, speed, and direction of aircraft 102. Based on data collected indicating the position, altitude, speed, and direction of aircraft 102, processing circuitry 374 may determine a 3D position of aircraft 102. Based on the determined 3D position of aircraft 102 and the 3D position of aircraft 112 determined based on the set of object data of object data 386 corresponding to 112, processing circuitry 374 of sensor health monitoring system 305 may determine the 3D position of aircraft 112 relative to the 3D position of aircraft 102. The 3D position of aircraft 112 relative to the 3D position of aircraft 102 may indicate an absolute distance between aircraft 112 and aircraft 102, an altitude difference between aircraft 112 and aircraft 102, a position of aircraft 112 relative to a sensor axis of radar system 304, or any combination thereof. For example, processing circuitry 374 may determine one or more angles between a line between aircraft 112 and aircraft 102 and a sensor axis of radar system 304.

In some examples, radar system 304 is oriented along a sensor axis. The sensor axis of radar system 304 may, in some examples, extend along a direction in which transmission circuitry 360 outputs one or more transmitted radar signals. In some examples, transmitted radar signals 106 may propagate outwards from transmission circuitry 360 along the sensor axis in a "cone" formation, where the sensor axis extends through a center of the cone. Transmitted radar signals 106 may reflect off one or more objects within the cone and return to receiving circuitry 362 as reflected radar signals 108. Based on where an object is located within the cone (e.g., in the center of the cone near the sensor axis, at an edge of the cone displaced from the sensor axis), reflected radar signals corresponding to the object may have different parameters. Sensor health monitoring system 305 may determine expected parameters of reflected radar signals corresponding to the object based on a location of the object relative to the sensor axis and the cone of radar system 304 as indicated by object data of object data 386 corresponding to the object.

Processing circuitry 374 may compare, for aircraft 112, one or more actual parameter values of a set of radar data of radar data 384 corresponding to aircraft 112 with the one or more expected parameter values of the set of radar data of radar data 384 corresponding to aircraft 112 determined based on the object data of object data 386 corresponding to aircraft 112. Based on one or more actual parameter values of a set of radar data of corresponding to aircraft 112 being different from one or more expected parameter values of the set of radar data corresponding to aircraft 112, sensor health monitoring system 305 may determine that one or more error conditions are present in radar system 304.

In some examples, to compare, for aircraft 112, one or more actual parameter values of a set of radar data of radar data 384 corresponding to aircraft 112 with the one or more expected parameter values of the set of radar data of radar data 384 corresponding to aircraft 112, processing circuitry 374 is configured to compare an actual magnitude of reflected radar signals 108B corresponding to aircraft 112 with an expected magnitude of reflected radar signals 108B corresponding to aircraft 112 determined based on object data 386. In some examples, processing circuitry 374 is configured to compare an actual frequency of reflected radar signals 108B corresponding to aircraft 112 with an expected frequency of reflected radar signals 108B corresponding to aircraft 112 determined based on object data 386. Based on comparing the actual frequency with the expected frequency, processing circuitry 374 may associate an object expected to be detected by radar system 304 with an object indicated by object data 386.

In some examples, to compare an actual parameter value of radar data corresponding to an object with an expected parameter value of radar data corresponding to an object, processing circuitry 374 of sensor health monitoring system 305 is configured to determine a difference between the actual parameter value and the expected parameter value. In some examples, to compare an actual parameter value of radar data corresponding to an object with an expected parameter value of radar data corresponding to an object, processing circuitry 374 of sensor health monitoring system 305 is configured to determine a ratio of the actual parameter value to the expected parameter value. In some examples, to compare an actual parameter value of radar data corresponding to an object with an expected parameter value of radar data corresponding to an object, processing circuitry 374 of sensor health monitoring system 305 is configured to perform any computation or comparison based on the actual parameter value and the expected parameter value.

Processing circuitry 374 of sensor health monitoring system 305 is configured to determine, based on comparing one or more actual parameter values of radar data corresponding to an object with one or more expected parameter values of radar data corresponding to the object, a reliability of radar system 304. For example, when one or more actual parameter values of radar data corresponding to an object do not match one or more expected parameter values of radar data corresponding to the object, processing circuitry 374 may determine that one or more error conditions are present in radar system 304. These one or more error conditions may, in some examples, represent error conditions present in circuitry of radar system 304 (e.g., transmission circuitry 360 and/or receiving circuitry 362).

In some examples, to determine the reliability of radar system 304, sensor health monitoring system 305 is configured to determine a difference between an actual parameter value of radar data corresponding to an object and an expected parameter value of radar data corresponding to the object. Sensor health monitoring system 305 may determine that one or more error conditions are present in radar system 304 based on the difference between the actual parameter value of the radar data corresponding to the object and the expected parameter value of radar data corresponding to the object being greater than the threshold difference value.

In some examples, to determine the reliability of radar system 304, sensor health monitoring system 305 is configured to determine a ratio of an actual parameter value of radar data corresponding to an object and to expected parameter value of radar data corresponding to the object. Sensor health monitoring system 305 may determine that one or more error conditions are present in radar system 304 based on the ratio of the actual parameter value of the radar data corresponding to the object to the expected parameter value of radar data corresponding to the object being greater than a threshold ratio value.

Sensor health monitoring system 305 is not limited to determining the reliability of radar system 304 based on reflected radar signals and object data 386 corresponding to one object. In some examples, sensor health monitoring system 305 may receive object data 386 corresponding to each object of a set of objects within a field of view of radar system 304. Radar system 304 may output transmitted radar signals and receive reflected radar signals corresponding to each object of the set of objects. Sensor health monitoring system 305 may compare, for each object of the set of objects, an actual parameter value of the radar data of radar data 384 corresponding to the object with an expected magnitude of the set of radar data calculated based on the location of the object as indicated by the object data of object data 386 for the object. Sensor health monitoring system 305 may determine, based on the comparison corresponding to each object of the set of objects, the reliability of radar system 304.

Sensor health monitoring system 305 is not limited to determining the reliability of radar system 304 by determining expected magnitudes of reflected radar data based on location data corresponding to aircraft. Sensor health monitoring system 305 may determine the reliability of radar system 304 by comparing the actual parameter value of radar data corresponding to any object with the expected parameter value of the radar data determined based on a known location of the object. The object can be any object configured to reflect radar signals and having a known location relative to radar system 304.

In some cases, sensor health monitoring system 305 may determine a reliability of radar system 304 based on reflected radar signals and object data 386 corresponding to each object of a set of objects over a period of time such that the set of objects are within the field of view of radar system 304 at different times. For example, a first object of the set of objects may be within the field of view of radar system 304 during a first window of time, a second object of the set of objects may be within the field of view of radar system 304 during a second window of time that does not overlap with the first window of time, a third object of the set of objects may be within the field of view of radar system 304 during a third window of time that at least partially overlaps with the second window of time and does not overlap with the first window of time, and so on. In any case, sensor health monitoring system 305 may determine a reliability of radar system 304 based on comparing reflected radar signals corresponding to a set of objects with object data 386 corresponding to the set of objects, where the set of objects are not necessarily within the field of view of radar system 304 during the exact same window of time.

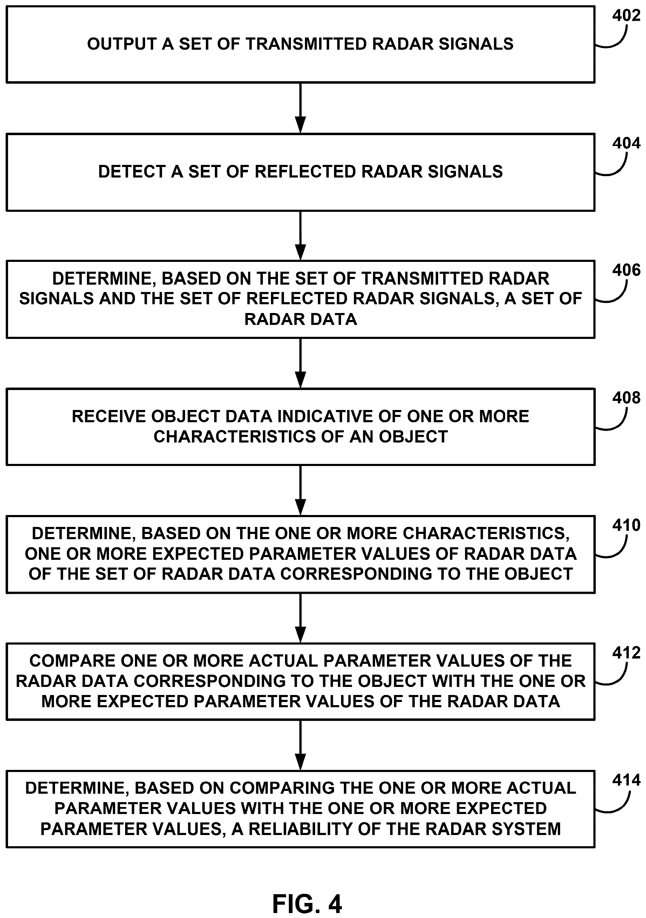

FIG. 4 is a flow diagram illustrating an example operation for determining a reliability of a radar system using a sensor health monitoring system, in accordance with one or more techniques of this disclosure. The example operation is described with respect to radar system 104 and sensor health monitoring system 105 of FIG. 1 and components thereof. However, the techniques of FIG. 4 may be performed by different components of radar system 104 and sensor health monitoring system 105, or by additional or alternative systems.

Radar system 104 of aircraft 102 may output a set of transmitted radar signals (402). Radar system 104 may detect a set of reflected radar signals (404). Processing circuitry of radar system 104 may determine, based on the set of transmitted radar signals and the set of reflected radar signals, a set of radar data (406). In some examples, the set of reflected radar signals correspond to the set of transmitted radar signals reflected off one or more objects such as weather 110, aircraft 112, and terrain 114. The set of radar data may, in some examples, include a difference between a transmission time of a transmitted radar signal of the set of transmitted radar signals corresponding to an object and a reception time of a reflected radar signal of the set of reflected radar signals corresponding to the object. In some examples, the set of radar data may include a difference between a magnitude of the transmitted radar signal of the set of transmitted radar signals corresponding to an object and a magnitude of the reflected radar signal of the set of reflected radar signals corresponding to the object. In some examples, the set of radar data may include a difference between a frequency of the transmitted radar signal of the set of transmitted radar signals corresponding to an object and a frequency of the reflected radar signal of the set of reflected radar signals corresponding to the object.

Sensor health monitoring system 105 may receive object data indicative of one or more characteristics of an object (408). In some examples, the object data may indicate the location of the object relative to radar system 104. In some examples, the object data may indicate an aspect angle of the object relative to radar system 104, a shape of the object, a size of the object, one or more surface materials of the object, or any combination thereof. In some examples, the object data is separate from the set of radar data determined by the radar system 104. The object data may include, in some examples, ADS-B data and/or TCAS data indicating a location, altitude, speed, and direction of an aircraft such as aircraft 112. Sensor health monitoring system 105 may determine, based on the one or more characteristics, one or more expected parameter values of radar data of the set of radar data corresponding to the object (410). That is, sensor health monitoring system 105 may estimate radar data for the object based on the object data corresponding to the object.

Sensor health monitoring system 105 may compare one or more actual parameter values of the radar data corresponding to the object with the one or more expected parameter values of the radar data (412). For example, sensor health monitoring system 105 may determine the one or more actual parameter values of the radar data corresponding to the object based on the radar data of the set of radar data. Sensor health monitoring system 105 may determine, based on comparing the one or more actual parameter values with the one or more expected parameter values, a reliability of radar system 104 (414).

In some examples, when sensor health monitoring system 105 determines that a reliability of radar system 104 does not exceed a threshold reliability or is otherwise insufficient, sensor health monitoring system 105 may perform one or more actions. In some examples, sensor health monitoring system 105 may output one or more alerts or warning messages based on determining that a reliability of radar system 104 is insufficient. Warning messages may include visual messages displayed on a user interface, audio messages, warning lights, or any combination thereof.

The following numbered clauses may demonstrate one or more aspects of the disclosure.

Clause 1: A system includes a radar system comprising transmission circuitry configured to output a set of transmitted radar signals, receiving circuitry configured to detect a set of reflected radar signals corresponding to the set of transmitted radar signals, and first processing circuitry configured to determine, based on the set of transmitted signals and the set of reflected radar signals, a set of radar data. The system also includes a sensor health monitoring system comprising second processing circuitry configured to receive object data indicative of one or more characteristics of an object, wherein the object data is separate from the set of radar data and determine, based on the one or more characteristics of the object, one or more expected parameter values of radar data of the set of radar data corresponding to the object. Additionally, the second processing circuitry is configured to compare one or more actual parameter values of the radar data corresponding to the object with the one or more expected parameter values of the radar data and determine, based on comparing the one or more actual parameter values with the one or more expected parameter values, a reliability of the radar system.

Clause 2: The system of clause 1, wherein the second processing circuitry is configured to: identify, in the set of radar data, the radar data corresponding to the object; and determine, based on the radar data, the one or more actual parameter values of the radar data corresponding to the object.

Clause 3: The system of any of clauses 1-2, wherein the radar data corresponding to the object comprises any one or combination of: a difference between a transmission time of a transmitted radar signal of the set of transmitted radar signals corresponding to the object and a reception time of a reflected radar signal of the set of reflected radar signals corresponding to the object; a difference between a magnitude of the transmitted radar signal of the set of transmitted radar signals corresponding to the object and a magnitude of the reflected radar signal of the set of reflected radar signals corresponding to the object; and a difference between a frequency of the transmitted radar signal of the set of transmitted radar signals corresponding to the object and a frequency of the reflected radar signal of the set of reflected radar signals corresponding to the obj ect.

Clause 4: The system of any of clauses 1-3, wherein the radar system is oriented along a sensor axis, and wherein the second processing circuitry is configured to: determine, based on the object data, a location of the object within a 3D space; identify a location of the radar system within the 3D space; and determine the location of the object relative to the radar system based on the location the object within the 3D space and the location of the radar system within the 3D space.

Clause 5: The system of clause 4, wherein the radar system is oriented along a sensor axis, and wherein to determine the location of the object relative to the radar system, the second processing circuitry is configured to: determine a distance between the radar system and the object; and determine one or more angles corresponding to a line between the radar system and the object and the sensor axis.

Clause 6: The system of any of clauses 1-5, wherein the radar system is oriented along a sensor axis, wherein the second processing circuitry is configured to determine, based on the object data, a location of the object relative to the sensor axis, and wherein to determine the one or more expected parameter values of the radar data corresponding to the object, the second processing circuitry is configured to determine one or more expected parameter values of the radar data based on the location of the object relative to the sensor axis.

Clause 7: The system of any of clauses 1-6, wherein to receive the object data indicative of the one or more characteristics of the object, the second processing circuitry is configured to: receive position data including 2D coordinates corresponding to the object, wherein the 2D coordinates indicate a location on a ground surface corresponding to a position of the object; and receive altitude data indicating an altitude of the object, wherein the altitude of the object represents a distance between the object and sea level or a distance between the object and ground level.

Clause 8: The system of any of clauses 1-7, wherein the object data comprises one or both of Automatic Dependent Surveillance-Broadcast (ADS-B) data and traffic collision avoidance system (TCAS) data.

Clause 9: The system of any of clauses 1-8, wherein to compare the one or more actual parameter values with the one or more expected parameter values, the second processing circuitry is configured to determine a difference between the one or more actual parameter values and the one or more expected parameter values, and wherein to determine the reliability of the radar system, the second processing circuitry is configured to determine whether the difference between the one or more actual parameter values and the one or more expected parameter values is greater than a threshold difference.

Clause 10: The system of clause 9, wherein the second processing circuitry is configured to: determine that the reliability of the radar system is not sufficient when the difference between the one or more actual parameter values and the one or more expected parameter values is greater than a threshold difference; and determine that the reliability of the radar system is sufficient when the difference between the one or more actual parameter values and the one or more expected parameter values is not greater than a threshold difference.

Clause 11: The system of any of clauses 1-10, wherein the object is a first object, wherein the object data is first object data, wherein the radar data is first radar data, wherein the one or more expected parameter values are a first one or more expected parameter values, wherein the one or more actual parameter values are a first one or more actual parameter values, and wherein the second processing circuitry is further configured to: receive second object data indicative of one or more characteristics of a second object, wherein the second object data is separate from the set of radar data; determine, based on the one or more characteristics of the second object, a second one or more expected parameter values of second radar data of the set of radar data corresponding to the second object; compare a second one or more actual parameter values of the reflected radar signals corresponding to the second object with the second one or more expected parameter values of the second radar data; and determine, based on comparing the first one or more actual parameter values with the first one or more expected parameter values and based on comparing the second one or more actual parameter values with the second one or more expected parameter values, a reliability of the radar system.

Clause 12: A method includes outputting, by transmission circuitry of a radar system, a set of transmitted radar signals, detecting, by receiving circuitry of the radar system, a set of reflected radar signals corresponding to the set of transmitted radar signals, and determining, by first processing circuitry of the radar system, a set of radar data based on the set of transmitted signals and the set of reflected radar signals. The method also includes receiving, by second processing circuitry of a sensor health monitoring system, object data indicative of one or more characteristics of an object, wherein the object data is separate from the set of radar data, determining, by the second processing circuitry based on the one or more characteristics of the object, one or more expected parameter values of radar data of the set of radar data corresponding to the object, comparing, by the second processing circuitry, one or more actual parameter values of the radar data corresponding to the object with the one or more expected parameter values of the radar data, and determining, by the second processing circuitry based on comparing the one or more actual parameter values with the one or more expected parameter values, a reliability of the radar system.

Clause 13: The method of clause 12, further comprising: identifying, by the second processing circuitry in the set of radar data, the radar data corresponding to the object; and determining, by the second processing circuitry based on the radar data, the one or more actual parameter values of the radar data corresponding to the object.

Clause 14: The method of any of clauses 12-13, wherein the radar system is oriented along a sensor axis, and wherein the method further comprises: determining, by the second processing circuitry based on the object data, a location of the object within a 3D space; identifying, by the second processing circuitry, a location of the radar system within the 3D space; and determining, by the second processing circuitry, the location of the object relative to the radar system based on the location the object within the 3D space and the location of the radar system within the 3D space.

Clause 15: The method of clause 14, wherein the radar system is oriented along a sensor axis, and wherein determining the location of the object relative to the radar system comprises: determining, by the second processing circuitry, a distance between the radar system and the object; and determining, by the second processing circuitry, one or more angles corresponding to a line between the radar system and the object and the sensor axis.

Clause 16: The method of any of clauses 12-15, wherein the radar system is oriented along a sensor axis, wherein the method further comprises determining, by the second processing circuitry based on the object data, a location of the object relative to the sensor axis, and wherein determining the one or more expected parameter values of the radar data corresponding to the object comprises determining, by the second processing circuitry, one or more expected parameter values of the radar data based on the location of the object relative to the sensor axis.

Clause 17: The method of any of clauses 12-16, wherein receiving the object data indicative of the one or more characteristics of the object comprises: receiving, by the second processing circuitry, position data including 2D coordinates corresponding to the object, wherein the 2D coordinates indicate a location on a ground surface corresponding to a position of the object; and receiving, by the second processing circuitry, altitude data indicating an altitude of the object, wherein the altitude of the object represents a distance between the object and sea level or a distance between the object and ground level.

Clause 18: The method of any of clauses 12-17, wherein comparing the one or more actual parameter values with the one or more expected parameter values comprises determining, by the second processing circuitry, a difference between the one or more actual parameter values and the one or more expected parameter values, and wherein determining the reliability of the radar system comprises determining, by the second processing circuitry, whether the difference between the one or more actual parameter values and the one or more expected parameter values is greater than a threshold difference.

Clause 19: The method of clause 18, further comprising: determining, by the second processing circuitry, that the reliability of the radar system is not sufficient when the difference between the one or more actual parameter values and the one or more expected parameter values is greater than a threshold difference; and determining, by the second processing circuitry, that the reliability of the radar system is sufficient when the difference between the one or more actual parameter values and the one or more expected parameter values is not greater than a threshold difference.

Clause 20: A non-transitory computer-readable medium includes instructions for causing one or more processors to control transmission circuitry of a radar system to output a set of transmitted radar signals, control receiving circuitry of the radar system to detect a set of reflected radar signals corresponding to the set of transmitted radar signals, and determine a set of radar data based on the set of transmitted signals and the set of reflected radar signals. Additionally, the instructions may cause the one or more processors to receive object data indicative of one or more characteristics of an object, wherein the object data is separate from the set of radar data, determine, based on the one or more characteristics of the object, one or more expected parameter values of radar data of the set of radar data corresponding to the object, compare one or more actual parameter values of the radar data corresponding to the object with the one or more expected parameter values of the radar data, and determine, based on comparing the one or more actual parameter values with the one or more expected parameter values, a reliability of the radar system.

In one or more examples, the circuitry described herein may utilize hardware, software, firmware, or any combination thereof for achieving the functions described. Those functions implemented in software may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure.

Instructions may be executed by one or more processors. The one or more processors may, for example, include one or more DSPs, general purpose microprocessors, application specific integrated circuits ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for performing the techniques described herein. Also, the techniques could be fully implemented in one or more circuits or logic elements.

The techniques of this disclosure may be implemented in a wide variety of devices or apparatuses that include integrated circuits (ICs) or sets of ICs (e.g., chip sets). Various components, modules, or units are described in this disclosure to emphasize functional aspects of devices configured to perform the disclosed techniques, but do not necessarily require realization by different hardware units. Rather, various units may be combined or provided by a collection of interoperative hardware units, including one or more processors as described above, in conjunction with suitable software and/or firmware.

Various illustrative aspects of the disclosure are described above. These and other aspects are within the scope of the following claims.

## Claims

1. A system comprising:
a radar system comprising:
transmission circuitry configured to output a set of transmitted radar signals;
receiving circuitry configured to detect a set of reflected radar signals corresponding to the set of transmitted radar signals; and
first processing circuitry configured to determine, based on the set of transmitted signals and the set of reflected radar signals, a set of radar data; and
a sensor health monitoring system comprising second processing circuitry configured to:
receive object data indicative of one or more characteristics of an object, wherein the object data is separate from the set of radar data;
determine, based on the one or more characteristics of the object, one or more expected parameter values of radar data of the set of radar data corresponding to the object;
compare one or more actual parameter values of the radar data corresponding to the object with the one or more expected parameter values of the radar data; and
determine, based on comparing the one or more actual parameter values with the one or more expected parameter values, a reliability of the radar system.

2. The system of claim 1, wherein the second processing circuitry is configured to:
identify, in the set of radar data, the radar data corresponding to the object; and
determine, based on the radar data, the one or more actual parameter values of the radar data corresponding to the object.

3. The system of claim 1 or 2, wherein the radar data corresponding to the object comprises any one or combination of:
a difference between a transmission time of a transmitted radar signal of the set of transmitted radar signals corresponding to the object and a reception time of a reflected radar signal of the set of reflected radar signals corresponding to the object;
a difference between a magnitude of the transmitted radar signal of the set of transmitted radar signals corresponding to the object and a magnitude of the reflected radar signal of the set of reflected radar signals corresponding to the object; and
a difference between a frequency of the transmitted radar signal of the set of transmitted radar signals corresponding to the object and a frequency of the reflected radar signal of the set of reflected radar signals corresponding to the object.

4. The system of any of claims 1-3, wherein the radar system is oriented along a sensor axis, and wherein the second processing circuitry is configured to:
determine, based on the object data, a location of the object within a three-dimensional (3D) space;
identify a location of the radar system within the 3D space; and
determine the location of the object relative to the radar system based on the location the object within the 3D space and the location of the radar system within the 3D space.

5. The system of claim 4, wherein the radar system is oriented along a sensor axis, and wherein to determine the location of the object relative to the radar system, the second processing circuitry is configured to:
determine a distance between the radar system and the object; and
determine one or more angles corresponding to a line between the radar system and the object and the sensor axis.

6. The system of any of claims 1-5, wherein the radar system is oriented along a sensor axis,
wherein the second processing circuitry is configured to determine, based on the object data, a location of the object relative to the sensor axis, and
wherein to determine the one or more expected parameter values of the radar data corresponding to the object, the second processing circuitry is configured to determine one or more expected parameter values of the radar data based on the location of the object relative to the sensor axis.

7. The system of any of claims 1-6, wherein to receive the object data indicative of the one or more characteristics of the object, the second processing circuitry is configured to:
receive position data including two-dimensional (2D) coordinates corresponding to the object, wherein the 2D coordinates indicate a location on a ground surface corresponding to a position of the object; and
receive altitude data indicating an altitude of the object, wherein the altitude of the object represents a distance between the object and sea level or a distance between the object and ground level.

8. The system of any of claims 1-7, wherein the object data comprises one or both of Automatic Dependent Surveillance-Broadcast (ADS-B) data and traffic collision avoidance system (TCAS) data.

9. The system of any of claims 1-8,
wherein to compare the one or more actual parameter values with the one or more expected parameter values, the second processing circuitry is configured to determine a difference between the one or more actual parameter values and the one or more expected parameter values, and
wherein to determine the reliability of the radar system, the second processing circuitry is configured to determine whether the difference between the one or more actual parameter values and the one or more expected parameter values is greater than a threshold difference.

10. The system of claim 9, wherein the second processing circuitry is configured to:
determine that the reliability of the radar system is not sufficient when the difference between the one or more actual parameter values and the one or more expected parameter values is greater than a threshold difference; and
determine that the reliability of the radar system is sufficient when the difference between the one or more actual parameter values and the one or more expected parameter values is not greater than a threshold difference.

11. The system of any of claims 1-10, wherein the object is a first object, wherein the object data is first object data, wherein the radar data is first radar data, wherein the one or more expected parameter values are a first one or more expected parameter values, wherein the one or more actual parameter values are a first one or more actual parameter values, and wherein the second processing circuitry is further configured to:
receive second object data indicative of one or more characteristics of a second object, wherein the second object data is separate from the set of radar data;
determine, based on the one or more characteristics of the second object, a second one or more expected parameter values of second radar data of the set of radar data corresponding to the second object;
compare a second one or more actual parameter values of the reflected radar signals corresponding to the second object with the second one or more expected parameter values of the second radar data; and
determine, based on comparing the first one or more actual parameter values with the first one or more expected parameter values and based on comparing the second one or more actual parameter values with the second one or more expected parameter values, a reliability of the radar system.

12. A method comprising:
outputting, by transmission circuitry of a radar system, a set of transmitted radar signals;
detecting, by receiving circuitry of the radar system, a set of reflected radar signals corresponding to the set of transmitted radar signals;
determining, by first processing circuitry of the radar system, a set of radar data based on the set of transmitted signals and the set of reflected radar signals;
receiving, by second processing circuitry of a sensor health monitoring system, object data indicative of one or more characteristics of an object, wherein the object data is separate from the set of radar data;
determining, by the second processing circuitry based on the one or more characteristics of the object relative to the radar system, one or more expected parameter values of radar data of the set of radar data corresponding to the object;
comparing, by the second processing circuitry, one or more actual parameter values of the radar data corresponding to the object with the one or more expected parameter values of the radar data; and
determining, by the second processing circuitry based on comparing the one or more actual parameter values with the one or more expected parameter values, a reliability of the radar system.

13. The method of claim 12, further comprising:
identifying, by the second processing circuitry in the set of radar data, the radar data corresponding to the object; and
determining, by the second processing circuitry based on the radar data, the one or more actual parameter values of the radar data corresponding to the object.

14. The method of claim 12 or 13, wherein the radar system is oriented along a sensor axis, and wherein the method further comprises:
determining, by the second processing circuitry based on the object data, a location of the object within a three-dimensional (3D) space;
identifying, by the second processing circuitry, a location of the radar system within the 3D space; and
determining, by the second processing circuitry, the location of the object relative to the radar system based on the location the object within the 3D space and the location of the radar system within the 3D space.

15. The method of any of claims 12-14, wherein the radar system is oriented along a sensor axis,
wherein the method further comprises determining, by the second processing circuitry based on the object data, a location of the object relative to the sensor axis, and
wherein determining the one or more expected parameter values of the radar data corresponding to the object comprises determining, by the second processing circuitry, one or more expected parameter values of the radar data based on the location of the object relative to the sensor axis.
